# EUROPÄISCHE PATENTSCHRIFT

(11) **EP 3 486 630 B1**
(45) Veröffentlichungstag und Bekanntmachung des Hinweises auf die Patenterteilung: **27.01.2021**
(21) Anmeldenummer: 18000863.3
(22) Anmeldetag: 02.11.2018
(51) Int. Cl.: G01L 11/06

(54) **MESSEINRICHTUNG ZUR ERMITTLUNG EINES DRUCKS IN EINEM MESSVOLUMEN**
MEASURING DEVICE FOR THE DETERMINATION OF PRESSURE IN A MEASUREMENT VOLUME
DISPOSITIF DE MESURE PERMETTANT DE DÉTERMINER UNE PRESSION DANS UN VOLUME DE MESURE

(30) Priorität: 21.11.2017 DE 102017010727
(43) Veröffentlichungstag der Anmeldung: 22.05.2019
(73) Patentinhaber: Diehl Metering GmbH, 91522 Ansbach (DE)
(72) Erfinder: Ploß, Peter, 95445 Bayreuth (DE); Mayle, Michael, 91522 Ansbach (DE); Benkert, Andreas, 91522 Ansbach (DE); Ponschab, Michael, 91052 Erlangen (DE)
(74) Vertreter: Diehl Patentabteilung

(56) Entgegenhaltungen:
- EP-A1- 0 088 362
- DE-A1-102005 009 818
- JP-A- 2002 296 133
- WENZEL S W ET AL: "A MULTISENSOR EMPLOYING AN ULTRASONIC LAMB-WAVE OSCILLATOR", IEEE TRANSACTIONS ON ELECTRON DEVICES, IEEE SERVICE CENTER, PISACATAWAY, NJ, US, Bd. 35, Nr. 6, 1. Juni 1988 (1988-06-01), Seiten 735-743, XP000005153, ISSN: 0018-9383, DOI: 10.1109/16.2525

## Beschreibung

Die Erfindung betrifft eine Messeinrichtung zur Ermittlung eines Drucks in einem ein Fluid aufnehmenden oder von dem Fluid durchströmten Messvolumen, wobei das Messvolumen zumindest abschnittsweise durch eine Seitenwand begrenzt ist, wobei die Seitenwand ein das Messvolumen umgreifendes Messrohr ausbildet. Daneben betrifft die Erfindung ein Verfahren zur Ermittlung eines Drucks in einem Messvolumen.

Es sind eine Vielzahl von Ansätzen bekannt, Eigenschaften eines Fluids, also eines Gases oder einer Flüssigkeit, in Rohrleitungen zu erfassen. Beispielsweise können Durchflussmengen und unter Umständen andere Fluideigenschaften durch einen Durchflusszähler, beispielsweise durch einen Ultraschallzähler, erfasst werden. Soll hierbei ein Druck des Fluids erfasst werden, ist ein separater Drucksensor erforderlich. Beispielsweise können Membranen in Kontakt mit der Flüssigkeit stehen und ein Druck kann anhand einer Verformung der Membran kapazitiv oder induktiv erfasst werden. Die Nutzung einer solchen Druckmessung in einem Durchflusszähler erhöht jedoch die Komplexität und somit auch die Kosten des Durchflusszählers. Zudem muss der Drucksensor im unmittelbarem Kontakt zu dem Fluid sein, weshalb beispielsweise bei Wasserzählern potentiell eine aufwändige Abdichtung des Sensors erforderlich ist und/oder die genutzten Materialien bestimmte Anforderungen erfüllen müssen, da sie im Betrieb in Kontakt mit Trinkwasser stehen.

Der Artikel S. W. Wenzel et al., "A Multisensor Employing an Ultrasonic Lamb-Wave Oscillator", IEEE TRANSACTIONS ON ELECTRON DEVICES, BAND 35, NR. 6, S. 735-743, offenbart einen Sensor, der die Ausbreitung von Lamb-Wellen in einer unterstützten dünnen Platte auswertet, wobei eine Schwingungsfrequenz die sensierte Variable beschreibt.

Ein Ansatz zur Druckmessung an Messrohren ist aus der Druckschrift EP 0 088 362 A1 bekannt. Hierbei wird die Resonanzfrequenz einer Umfangsschwingung des Rohrs ermittelt.

Die Druckschrift JP 2002296133 A schlägt vor, einen Druck in einem Messrohr dadurch zu ermitteln, dass ein Ultraschallstrahl durch den Mittelpunkt des Messrohrs gesendet wird und anhand der Laufzeit der Druck bestimmt wird. Hierbei wird ausgenutzt, dass ein Zusammenhang zwischen der Schallgeschwindigkeit im Fluid und dem Druck bekannt ist.

Ein Verfahren zum Messen eines Drucks, bei dem eine mit einem bekannten Fluid gefüllte Kammer genutzt wird, und eine von akustischen Eigenschaften des Messfluids abhängige Messgröße als Maß für den Druck bestimmt wird, ist aus der Druckschrift DE 10 2005 009 818 A1 bekannt, Hierbei kann die Schallgeschwindigkeit im Messfluid zur Druckbestimmung genutzt werden. Da diese Schallgeschwindigkeit nicht nur vom Druck, sondern auch von der Temperatur abhängt, schlägt diese Druckschrift vor, zur Temperaturbestimmung eine Schallgeschwindigkeit innerhalb einer Wand zu bestimmen, um die Temperatur zu ermitteln und zu berücksichtigen.

Der Erfindung liegt somit die Aufgabe zugrunde, eine Möglichkeit zur Messung eines Drucks in einem Messvolumen anzugeben, die technisch einfach umsetzbar ist und insbesondere mit geringem technischem Aufwand im Durchflusszähler integrierbar ist.

Die Aufgabe wird erfindungsgemäß durch eine Messeinrichtung der eingangs genannten Art gelöst, wobei an der Seitenwand ein Schwingungswandler angeordnet ist, wobei durch eine Steuereinrichtung der Messeinrichtung der Schwingungswandler ansteuerbar ist, um eine durch die Seitenwand geführte Welle anzuregen, wobei die geführte Welle durch die Seitenwand entlang eines Ausbreitungspfades, der wenigstens einmal in Umfangsrichtung um das Messrohr umläuft, zurück zu dem Schwingungswandler oder zu wenigstens einem weiteren Schwingungswandler führbar und dort durch die Steuereinrichtung zur Ermittlung von Messdaten erfassbar ist, wobei der Druck durch die Steuereinrichtung in Abhängigkeit der Messdaten durch eine Laufzeiterfassung ermittelbar ist, bei der eine Zeitdauer ermittelt wird, bis die geführte Welle entlang des Ausbreitungspfades zu dem Schwingungswandler zurückkehrt oder bis sie den weiteren Schwingungswandler erreicht.

Der Erfindung liegt die Idee zugrunde, einen Druck in dem Messvolumen dadurch zu messen, dass ein Einfluss dieses Drucks auf eine in einer das Messvolumen begrenzenden Seitenwand geführte Welle ermittelt wird und in Abhängigkeit hiervon der Druck bestimmt wird. Hierbei wird ausgenutzt, dass ein Druck in dem Messvolumen eine Kraft auf die Seitenwand ausübt, womit eine mechanische Spannung in der Seitenwand resultiert. Aufgrund dieser Spannung verändern sich die Eigenschaften der Seitenwand bezüglich der Wellenführung. Insbesondere ändert sich aufgrund des akusto-elastischen Effekts die Schallgeschwindigkeit in der Wand, womit eine Wandspannung und somit der Druck erfindungsgemäß durch eine Laufzeiterfassung ermittelt werden kann.

Erfindungsgemäß wird eine Zeitdauer ermittelt, bis die geführte Welle entlang des Ausbreitungspfades zu dem Schwingungswandler zurückkehrt beziehungsweise bis sie einen weiteren Schwingungswandler erreicht. Hierzu kann die geführte Welle beispielsweise mit einer pulsartigen Einhüllenden ausgesandt werden, so dass Laufzeiten leicht ermittelt werden können. Alternativ oder ergänzend können jedoch auch andere Messdaten ausgewertet werden, beispielsweise eine Pulsform beziehungsweise eine Form der Einhüllenden der geführten Welle, eine Phasenlage der empfangenen Welle relativ zu einer Referenzwelle, die insbesondere eine definierte Phasenlage zur ausgesendeten Welle aufweist, oder Ähnliches. Die beschriebenen Messdaten können auch spektral aufgelöst erfasst werden, beispielsweise um zwischen unterschiedlichen Schwingungsmoden der geführten Welle zu unterscheiden. Es ist auch möglich mehrere Schwingungswandler zur Erfassung der Messdaten zu nutzen, die insbesondere beabstandet zueinander an der Seitenwand angeordnet sind. Dies kann beispielsweise zur Validierung des Messung und/oder zur Verbesserung der Messgenauigkeit dienen. Der Zusammenhang zwischen der Laufzeit und dem Druck im Messvolumen kann für die einzelne Messeinrichtung oder für eine Gruppe von im Wesentlichen baugleichen Messeinrichtungen einmalig kalibriert werden und entsprechende Kalibrierdaten können im Rahmen des Messbetriebs genutzt werden, um aus der Laufzeit einen Druck zu ermitteln. Der Druck kann ausschließlich aus den Messdaten ermittelt werden, es ist jedoch auch möglich, weitere Parameter des Fluids, beispielsweise eine momentane Durchflussmenge, eine Fluidtemperatur, eine Zusammensetzung des Fluids beziehungsweise eine Art des Fluids oder Ähnliches zu berücksichtigen. Ergänzend oder alternativ können Parameter der Seitenwand, insbesondere deren Material und/oder Dicke, und oder der Schwingungswandler, insbesondere deren relative Position bzw. Beabstandung, berücksichtigt werden.

Die Seitenwand kann insbesondere ein von dem Fluid durchströmbares Messrohr oder einen Teil eines solchen Messrohrs bilden. Beispielsweise kann die Seitenwand Teil des Messrohrs eines Durchflusszählers sein. Die Seitenwand kann beispielsweise aus Kunststoff oder Metall oder einem Verbundstoff, der beispielsweise Glasfasern umfassen kann, bestehen.

Der Schwingungswandler ist vorzugsweise ein Ultraschallwandler. Vorzugsweise erfolgt eine modenreine Anregung einer geführten Welle oder eine Anregung von einigen wenigen Moden. Die geführte Welle kann beispielsweise eine Rayleigh-Welle, eine Quasi-Scholte-Welle oder eine Lamb-Welle sein. Erfolgt eine Anregung mit einer Frequenz, bei der nur die Grundmoden anregbar sind, kann eine im Wesentlichen modenreine Anregung erleichtert sein. Eine Modenselektivität kann beispielsweise durch Vorgabe einer Raumfrequenz, beispielsweise durch Nutzung eines Interdigital-Transducers oder die Nutzung von mehreren beabstandeten Anregungselementen erreicht werden. Eine modenreine Anregung ist vorteilhaft, da unterschiedliche Schwingungsmoden sich in der Seitenwand typischerweise mit unterschiedlichen Ausbreitungsgeschwindigkeiten ausbreiten, wodurch potentiell die Auswertung der Messdaten erschwert sein kann.

Die Seitenwand kann wenigstens ein Dämpfelement aufweisen, durch das die geführte Welle bedämpfbar ist und/oder die Seitenwand kann wenigstens ein Reflexionselement aufweisen, durch das die geführte Welle zumindest teilweise reflektierbar ist. Durch die Nutzung wenigstens eines Dämpfelements beziehungsweise wenigstens eines Reflexionselements kann erreicht werden, dass die geführte Welle im Wesentlichen auf genau einem Ausbreitungspfad oder auf einer vorgegebenen geringen Anzahl von Ausbreitungspfaden zurück zu dem Schwingungswandler beziehungsweise zu dem weiteren Schwingungswandler geführt wird. Dadurch kann die Auswertung der Messdaten zur Ermittlung des Drucks erleichtert werden. Insbesondere kann der Ausbreitungspfad seitlich durch das wenigstens eine Dämpfelement beziehungsweise das wenigstens eine Reflexionselement begrenzt sein.

Das Dämpfelement kann dadurch gebildet werden, dass an der Seitenwand ein Material mit hoher innerer Reibung, beispielsweise ein Schaumstoff, angebracht wird. Alternativ ist es zur Bedämpfung der geführten Welle möglich, dass mehrere Reflexionselemente genutzt werden, deren Abstände derart gewählt sind, dass wenigstens eine der angeregten Schwingungsmoden der geführten Welle destruktiv interferiert.

Ein Reflexionselement kann insbesondere dadurch realisiert werden, dass sich die Dicke der Seitenwand, insbesondere stufenartig, ändert. Das Dämpfelement und/oder das Reflexionselement können dadurch ausgebildet sein, dass die Seitenwand wenigstens eine Ausnehmung und/oder wenigstens einen Vorsprung aufweist. Insbesondere kann die Ausnehmung beziehungsweise kann der Vorsprung an jener Seite der Seitenwand angeordnet sein, an der auch der Schwingungswandler beziehungsweise die Schwingungswandler angeordnet ist bzw. sind, insbesondere an einer von dem Messvolumen abgewandten Seite der Seitenwand. Im Grenzbereich der Ausnehmung beziehungsweise des Vorsprungs kann sich die Dicke der Seitenwand insbesondere stufenartig ändern. Hierdurch ändert sich die akustische Impedanz für die Führung der geführten Welle plötzlich, wodurch Reflexionen resultieren. Durch das Vorsehen von mehreren Vorsprüngen beziehungsweise Ausnehmungen kann, wie vorangehend erläutert, eine destruktive Interferenz und somit eine Bedämpfung bestimmter Moden realisiert werden.

Der Ausbreitungspfad kann zumindest in einem Abschnitt des Ausbreitungspfades seitlich durch das Dämpfelement und/oder das Reflexionselement begrenzt sein. Insbesondere kann der Ausbreitungspfad über seine gesamte Länge durch das Dämpfelement beziehungsweise das Reflexionselement begrenzt sein. Unter einer seitlichen Begrenzung ist eine Begrenzung in eine Querrichtung zu verstehen, die senkrecht zu der Längsrichtung des Ausbreitungspfades beziehungsweises einer Hauptausbreitungsrichtung der geführten Welle steht. Durch die Begrenzung des Ausbreitungspfades kann sichergestellt werden, dass die geführte Welle nur entlang genau eines Ausbreitungspfades oder entlang einer vorgegebenen Gruppe von Ausbreitungspfaden von dem Schwingungswandler zurück zu dem Schwingungswandler beziehungsweise zu dem weiteren Schwingungswandler geführt werden kann. Dies erleichtert die Auswertung der Messdaten, da unkontrollierte Mehrwegausbreitungen vermieden werden können. Zudem kann hierdurch erreicht werden, dass die geführte Welle gezielt entlang eines Ausbreitungspfades geführt wird, der relativ lang ist, so dass bereits relativ kleine Änderungen der Schallgeschwindigkeit für eine bestimmte Mode zu deutlichen Änderungen der Messdaten führen können.

Die Seitenwand kann in dem Bereich des Ausbreitungspfades eine andere Wandstärke aufweisen als in einem zu dem Bereich des Ausbreitungspfads benachbarten Abschnitt der Seitenwand. Insbesondere kann die Seitenwand im Bereich des Ausbreitungspfades dicker oder dünner sein als an allen anderen Stellen des Messbereichs. Durch die Änderung der Wandstärke der Seitenwand an den Rändern des Ausbreitungspfades entstehen dort, wie bereits vorangehend zu den Reflexionselementen erläutert, Reflexionen, die dazu dienen können, die geführte Welle auf einem definierten Ausbreitungspfad oder auf mehreren definierten Ausbreitungspfaden zu führen. Vorzugsweise ist die Wandstärke in Bereichen des Ausbreitungspfades dünner als in einem benachbarten Abschnitt der Seitenwand, da es bei relativ dünnen Seitenwänden, wie später noch genauer erläutert werden wird, einfacher ist, geführte Wellen in der Seitenwand anzuregen, die im Wesentlichen nicht in das Fluid eingekoppelt werden, womit zusätzliche Ausbreitungspfade und eine Bedämpfung der geführten Welle vermieden werden können.

Die Seitenwand kann in dem Bereich des Ausbreitungspfades insbesondere eine im Wesentlichen konstante Dicke aufweisen, wobei die Dicke der Seitenwand außerhalb des Ausbreitungspfades sich von dieser Dicke unterscheidet.

Die Seitenwand bildet ein das Messvolumen umgreifendes Messrohr aus, wobei der Ausbreitungspfad wenigstens einmal in Umfangsrichtung das Messrohr umläuft. Beispielsweise kann ein rundes oder elliptisches Messrohr genutzt werden. Der Ausbreitungspfad kann das Messvolumen beziehungsweise das Messrohr ringförmig umlaufen, wobei dieser Ring in Längsrichtung des Rohrs verzerrt sein kann, so dass beispielsweise eine schräg zur Strömungsrichtung umlaufende Ellipse oder verzerrte Ellipse oder eine Konusform gebildet werden kann. Eine solche Form ist insbesondere vorteilhaft, wenn die geführte Welle zurück zum gleichen Schwingungswandler geführt werden soll. Soll die geführte Welle zu einem weiteren Schwingungswandler geführt werden, kann der Ausbreitungspfad beispielsweise helixförmig um das Messrohr umlaufen. Läuft der Ausbreitungspfad wenigstens einmal um das Messvolumen um, kann hierdurch erreicht werden, dass eine anisotrope Druckverteilung an der Seitenwand, beispielsweise aufgrund des Fluidpfades durch das Messrohr oder aufgrund von Turbulenzen der Strömung, durch Mittlung über den gesamten Rohrumfang aus den Messdaten herausgemittelt wird. Somit sind die Messwerte ein besserer Indikator für den hydrostatischen Druck im Messrohr, wenn der Ausbreitungspfad das Messrohr wenigstens einmal umläuft.

Vorzugsweise umläuft der Ausbreitungspfad das Messrohr mehrfach. Hierdurch kann erreicht werden, dass die durch die geführte Welle zurückgelegte Wegstrecke vergrößert wird, wodurch auch größere druckabhängige Laufzeitunterschiede erreicht werden können. Wird die geführte Welle von dem Schwingungswandler zu dem weiteren Schwingungswandler geführt, kann dies beispielsweise durch eine helixförmige Führung der geführten Welle um das Messrohr herum erreicht werden.

Ein mehrfaches Umlaufen der geführten Welle um das Messrohr ist jedoch auch möglich, wenn die geführte Welle zu dem gleichen Schwingungswandler zurückgeführt wird, der sie angeregt hat. Die geführte Welle kann entlang des Ausbreitungspfades wenigstens einmal zurück zu dem Schwingungswandler und an ihm vorbeiführbar sein, um ein weiteres Mal zu dem Schwingungswandler geführt zu werden, wobei die Steuereinrichtung derart eingerichtet sein kann, dass die Messdaten oder zumindest Teile der Messdaten erfasst werden, wenn die geführte Welle zu dem weiteren Mal zu dem Schwingungswandler zurückgeführt wird. Anders ausgedrückt werden somit zumindest Teile der Messdaten erst dann erfasst, wenn die geführte Welle den anregenden Schwingungswandler zum wiederholten Mal passiert, also beispielsweise wenn die geführte Welle zum zweiten oder dritten Mal zum Schwingungswandler zurückgeführt wird. Beispielsweise kann die geführte Welle mit einer pulsartigen Einhüllenden angeregt werden und die Steuereinrichtung kann ein jeweiliges Vorbeilaufen der geführten Welle an dem Schwingungswandler anhand von über den Schwingungswandler erfassten Daten erkennen und die Anzahl der Durchgänge zählen. Die Messdaten können ausschließlich oder zumindest teilweise nach einer bestimmten Zahl von vorangehenden Durchläufen erfasst werden. Es können auch zu mehreren Zeitpunkten, insbesondere nach unterschiedlichen Anzahlen vorangehender Durchläufe, Messdaten erfasst werden. Die hierbei erfassten Signale können gemeinsam oder unabhängig voneinander ausgewertet werden, insbesondere um einen ermittelten Druck zu validieren bzw. eine Messgenauigkeit, beispielsweise durch Mittelwertbildung, zu verbessern. Alternativ kann beispielsweise eine Erfassung der geführten Welle für ein vorgegebenes Zeitintervall nach dem Aussenden ausgesetzt werden. Dieses Zeitintervall kann derart gewählt werden, dass die Messdaten erst nach mehrmaligem Umlauf der geführten Welle um das Messrohr erfasst werden.

Die Steuereinrichtung, die Seitenwand und der Schwingungswandler können derart eingerichtet sein, dass eine Rayleigh-Welle, eine Quasi-Scholte-Welle oder Lamb-Welle als geführte Welle angeregt wird. Eine Rayleigh-Welle ist eine Oberflächenwelle, bei der im Wesentlichen nur eine Seite der Seitenwand schwingt. Sind die Schwingungswandler auf einer von dem Messvolumen abgewandten Seite der Seitenwand angeordnet, kann hierdurch erreicht werden, dass im Wesentlichen keine Schwingungsenergie auf das geführte Fluid übertragen wird. Hierdurch können zusätzliche Ausbreitungspfade und die Bedämpfung der geführten Welle vermieden werden.

Rayleigh-Wellen sind beispielsweise dann anregbar, wenn die Dicke der Seitenwand erheblich größer ist als die Wellenlänge der geführten Welle im Festkörper. In einigen Anwendungsfällen kann es, beispielsweise um eine Bedämpfung der Welle zu reduzieren, vorteilhaft sein, stattdessen eine Lamb-Welle anzuregen, bei der beide Seiten der Seitenwand gemäß der angeregten Schwingungsmode symmetrisch oder asymmetrisch zueinander schwingen. Hierbei sollte die Anregung vorzugsweise mit einer Frequenz und Wellenlänge erfolgen, bei der im Wesentlichen keine Energieübertragung von der Seitenwand zu dem Fluid erfolgt. Dies kann typischerweise stets erreicht werden, wenn die Dicke der Seitenwand ausreichend gering ist und/oder eine ausreichend niedrige Anregungsfrequenz genutzt wird. Der Rayleigh-Winkel, der einen Abstrahlwinkel einer im Fluid angeregten Kompressionswelle beschreibt, hängt vom Sinus des Quotienten der Phasengeschwindigkeit der entsprechenden Welle im Fluid und in der Seitenwand ab. Aus dieser Beziehung können bei bekannter Dispersionsrelation der Seitenwand Bedingungen ermittelt werden, bei denen keine Abstrahlung einer Kompressionswelle in das Fluid möglich ist.

Wird als Fluid eine Flüssigkeit genutzt, können auch Quasi-Scholte-Wellen angeregt werden, die entlang der Grenzschicht zwischen dem Fluid und der Seitenwand geführt werden.

Die Seitenwand kann zumindest im Bereich des Ausbreitungspfades eine konstante Dicke aufweisen und/oder eine Innenfläche und/oder eine Außenfläche der Seitenwand können in diesem Bereich eine stetige Krümmung ohne Vorzeichenwechsel aufweisen. Anders ausgedrückt kann die Seitenwand zumindest im Bereich des Ausbreitungspfades glatt sein. Hierdurch kann die geführte Welle im Wesentlichen ungestört entlang des Ausbreitungspfades geführt werden.

Die Messeinrichtung kann beispielsweise als Durchflusszähler ausgebildet sein, insbesondere als Ultraschallzähler. Der Schwingungswandler und/oder der weitere Schwingungswandler können in dem Durchflusszähler in einem weiteren Betriebsmodus dazu benutzt werden, geführte Wellen anzuregen, die anschließend Kompressionsschwingungen in dem Fluid anregen, die über das Fluid zu dem jeweils anderen Schwingungswandler oder zu einem zusätzlichen Schwingungswandler geführt werden. In diesem Fall kann durch Ermittlung der Laufzeit beziehungsweise des Laufzeitunterschieds zwischen den unterschiedlichen Übertragungsrichtungen eine Durchflussgeschwindigkeit bestimmt werden und/oder es können weitere Parameter des Fluids ermittelt werden. Wie obig erläutert, kann es insbesondere von einer Anregungsfrequenz abhängen, ob eine geführte Welle angeregt wird, die Druckwellen in dem Fluid anregt, oder ob eine geführte Welle angeregt wird, die im Wesentlichen keine Druckwellen in dem Fluid anregt. Somit ist es beispielsweise möglich, dass die Messeinrichtung den Schwingungswandler beziehungsweise den weiteren Schwingungswandler mit unterschiedlichen Frequenzen anregen kann und/oder dass durch mehrere Anregungselemente der einzelnen Schwingungswandler verschiedene Anregungsgeometrien implementiert werden, wobei in einem ersten Anregungsmodus eine Druckmessung erfolgt und in einem zweiten Anregungsmodus beispielsweise eine Durchflussmessung.

Neben der erfindungsgemäßen Messeinrichtung betrifft die Erfindung ein Verfahren zur Ermittlung eines Drucks in einem ein Fluid aufnehmenden oder von dem Fluid durchströmten Messvolumen, wobei das Messvolumen zumindest abschnittsweise durch eine Seitenwand begrenzt wird, wobei die Seitenwand ein das Messvolumen umgreifendes Messrohr ausbildet, wobei an der Seitenwand ein Schwingungswandler angeordnet ist, wobei der Schwingungswandler durch eine Steuereinrichtung angesteuert wird, um eine durch die Seitenwand geführte Welle anzuregen, wobei die geführte Welle durch die Seitenwand entlang eines Ausbreitungspfades, der wenigstens einmal in Umfangsrichtung um das Messrohr umläuft, zurück zu dem Schwingungswandler oder zu wenigstens einem weiteren Schwingungswandler geführt und dort durch die Steuereinrichtung zur Ermittlung von Messdaten erfasst wird, wobei der Druck durch die Steuereinrichtung in Abhängigkeit der Messdaten durch eine Laufzeiterfassung ermittelt wird, bei der eine Zeitdauer ermittelt wird, bis die geführte Welle entlang des Ausbreitungspfades zu dem Schwingungswandler zurückkehrt oder bis sie den weiteren Schwingungswandler erreicht. Das erfindungsgemäße Verfahren kann mit den zu der erfindungsgemäßen Messeinrichtung erläuterten Merkmalen weitergebildet werden und umgekehrt.

Weitere Vorteile und Einzelheiten der Erfindung ergeben sich aus den folgenden Ausführungsbeispielen sowie den zugehörigen Zeichnungen. Hierbei zeigen schematisch:
- Fig. 1 bis 3: verschiedene Ansichten eines Ausführungsbeispiels einer erfindungsgemäßen Messeinrichtung, mit der ein Ausführungsbeispiel des erfindungsgemäßen Verfahrens durchführbar ist, und
- Fig. 4 bis 9: Detailansichten weiterer Ausführungsbeispiele der erfindungsgemäßen Messeinrichtung, mit denen jeweils ein Ausführungsbeispiel des erfindungsgemäßen Verfahrens durchführbar ist.

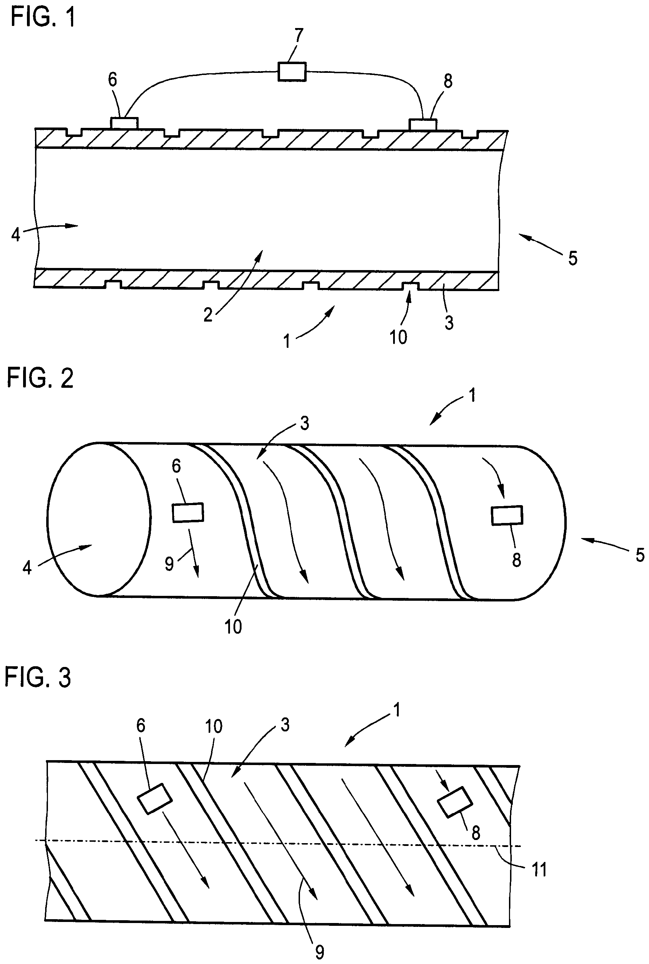

Fig. 1 zeigt eine geschnittene Ansicht einer Messeinrichtung 1 zur Ermittlung eines Drucks in einem ein Fluid aufnehmenden beziehungsweise von dem Fluid durchströmbaren Messvolumen 2. Das Messvolumen wird durch die eine Seitenwand 3 begrenzt, die in Form eines Messrohrs ausgebildet ist. Es kann sich hier insbesondere um ein Messrohr eines Durchflusszählers handeln. Das Fluid kann hierbei von einem Fluideinlass 4 zu einem Fluidauslass 5 strömen oder auch im Messrohr stehen. Durch eine Steuereinrichtung 7 ist ein Schwingungswandler 6 ansteuerbar, um eine geführte Welle in der Seitenwand 3 anzulegen. Der Schwingungswandler 6 kann beispielsweise ein piezoelektrischer Schwingungswandler sein, der durch eine von der Steuereinrichtung 7 bereitgestellte Wechselspannung zu Schwingungen angeregt wird.

Die Frequenz der Anregung kann beispielsweise so gewählt werden, dass Rayleigh-Wellen als geführte Wellen angeregt werden. Bei diesen schwingt im Wesentlichen ausschließlich eine von dem Messvolumen 2 abgewandte Außenfläche der Seitenwand 3. Alternativ wäre es möglich Lamb-Wellen anzuregen, bei denen beide Seitenflächen der Seitenwand 3 schwingen. Um eine Bedämpfung der geführten Welle durch das Fluid zu vermeiden und Möglichkeiten für Mehrwegausbreitungen einzuschränken ist es vorteilhaft, wenn die Anregungsfrequenz hierbei so gewählt wird, dass durch die geführte Welle im Wesentlichen keine Kompressionsschwingungen des Fluids angeregt werden. Dies ist für die Grundschwingungen von Lamb-Wellen stets möglich, wenn die Dicke der Seitenwand 3 nicht zu dick gewählt wird und/oder eine ausreichend niedrige Anregungsfrequenz genutzt wird. Prinzipiell wäre es auch möglich, die Anregungsfrequenz so zu wählen, dass eine Quasi-Scholte-Welle, also eine Welle, die entlang des Fluid-Festkörper-Interface geführt wird, angeregt wird. Beispielsweise könnte die Anregung derart erfolgen, dass die Wellenausbreitung im Wesentlichen entlang der dem Messvolumen 2 zugewandten Innenfläche der Seitenwand 3 erfolgt.

Die Ausbreitungsgeschwindigkeit der geführten Welle hängt von der Schallgeschwindigkeit beziehungsweise von der Phasengeschwindigkeit für die geführte Welle in der Seitenwand 3 ab. Da diese Schall- beziehungsweise Phasengeschwindigkeit aufgrund des akusto-elastischen Effekts von einer Spannung in der Seitenwand 3 abhängt und da diese Spannung wiederum von dem Druck des Fluids in dem Messvolumen 2 abhängt, kann durch eine Ermittlung der Ausbreitungsgeschwindigkeit, beispielsweise durch eine Laufzeitmessung, durch die Steuereinrichtung 7 der Druck im Messvolumen 2 ermittelt werden. Hierzu wird die geführte Welle durch die Seitenwand 3 entlang eines Ausarbeitungspfades zu einem weiteren Schwingungswandler 8 geführt, über den die Steuereinrichtung 7 Messdaten ermittelt, wonach der Druck durch die Steuereinrichtung 7 in Abhängigkeit dieser Messdaten ermittelt wird. Beispielsweise kann eine Laufzeit der geführten Welle von dem Schwingungswandler 6 zu dem Schwingungswandler 8 gemessen werden.

Prinzipiell wäre es möglich, die Laufzeit der geführten Welle für einen Ausbreitungsweg zu ermitteln, der unmittelbar von dem Schwingungswandler 6 zu dem weiteren Schwingungswandler 8 verläuft. Um eine hohe Messgenauigkeit zu erreichen, ist es jedoch vorteilhaft, wenn der Ausbreitungspfad relativ lange ist, da mit steigender Laufzeit für die geführte Welle von dem Schwingungswandler 6 zu dem weiteren Schwingungswandler 8 auch die Laufzeitunterschiede aufgrund der Spannung in der Seitenwand 3 und somit aufgrund des Drucks im Messvolumen 2 steigen. Zugleich ist es vorteilhaft, wenn der Ausbreitungspfad wenigstens einmal, vorzugsweise mehrfach, um das durch die Seitenwand 3 gebildete Messrohr beziehungsweise um das Messvolumen 2 geführt wird. Hierdurch kann erreicht werden, dass eine anisotrope Druckausübung durch das Fluid, beispielsweise aufgrund einer Strömungsführung des Fluids in dem Messrohr oder aufgrund einer turbulenten Strömung, die Druckmessung nicht stört, da alle Seiten des Messrohrs zu der gemessenen Gesamtlaufzeit beitragen.

Um diese beiden Vorteile zu erreichen, umläuft der Ausbreitungspfad das Messrohr 3 beziehungsweise das Messvolumen 2 helixförmig. Dies wird im Folgenden mit Bezug auf Fig. 2 und 3 näher erläutert. Fig. 2 zeigt eine Außenansicht des Messrohrs und Fig. 3 zeigt schematisch die entrollte Oberfläche des Messrohrs. Ein Punkt am unteren Rand der Darstellung der Seitenwand 3 in Fig. 3 entspricht somit einem Punkt am oberen Rand an der gleichen Position in Querrichtung in Fig. 3. Der Bereich oberhalb der gestrichelten Linie 11 entspricht der in Fig. 2 dargestellten Seite des Messrohrs und der unterhalb der gestrichelten Linie 11 dargestellte Bereich der Rückseite.

Die Pfeile 9 zeigen den gewünschten, helixförmigen Ausbreitungspfad. Ein solcher Ausbreitungspfad kann dadurch erreicht werden, dass an der Seitenwand 3 ein helixförmiges Reflexionselement 10 vorgesehen ist, das durch eine helixförmige Ausnehmung in der Seitenwand 3 realisiert ist. Durch die stufenartige Dickenänderung der Seitenwand 3 an den Rändern des Reflexionselements 10 wird eine auf das Reflexionselement 10 auflaufende geführte Welle weitgehend reflektiert. Hierdurch kann erreicht werden, dass die geführte Welle im Wesentlichen ausschließlich entlang des durch die Pfeile 9 gezeigten Ausbreitungspfades von dem Schwingungswandler 6 zu dem weiteren Schwingungswandler 8 führbar ist.

Statt einer reinen Reflexion der geführten Welle an dem Reflexionselement 10 ist es auch möglich, die Reflexion derart zu realisieren, dass die reflektierte Welle gedämpft wird. Hierdurch kann eine Mehrwegausbreitung unterdrückt werden. Eine Bedämpfung der reflektierten Welle kann beispielsweise dadurch möglich sein, dass die Abmessungen der Ausnehmung auf die Wellenlänge der geführten Welle abgestimmt werden. Durch eine Reflexion an beiden Kanten der Ausnehmung kann eine zumindest teilweise Auslöschung der reflektierten geführten Welle realisiert werden.

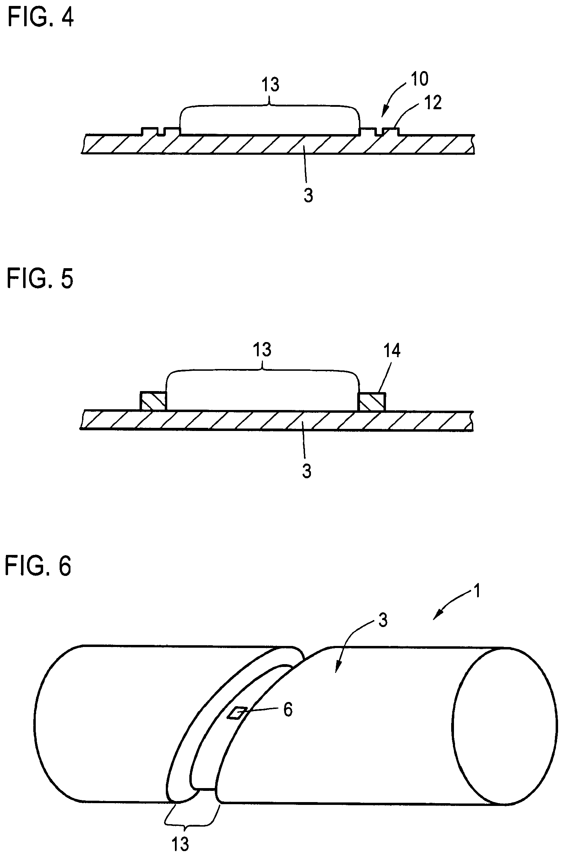

Alternativ zu einer Ausnehmung kann als Reflexionselement 10 auch ein Vorsprung der Seitenwand genutzt werden. Fig. 4 zeigt ein alternatives Ausführungsbeispiel, bei dem die Seitenwand 3 zwei Vorsprünge 12 als Reflexionselement 10 aufweist. Der Ausbreitungspfad kann dann in dem Bereich 13 verlaufen. Statt zwei Vorsprüngen 12 könnte auch nur ein einziger Vorsprung 12 als Reflexionselement 10 verwendet werden oder es können auch drei oder mehr Vorsprünge verwendet werden. Auch bei der Nutzung von Ausnehmungen als Reflexionselement 10 ist es möglich, mehrere Ausnehmungen zu nutzen. Eine Nutzung von mehreren Vorsprüngen oder mehreren Ausnehmungen oder von einer Mischung zwischen Vorsprüngen und Ausnehmungen als Reflexionselement 10 kann dazu dienen, den Reflexionsgrad und/oder eine Dämpfung der reflektierten Welle zu verbessern bzw. dazu, eine Transmission durch das Reflexionselement 10 zu reduzieren.

Fig. 5 zeigt eine weitere Möglichkeit, den Bereich 13, in dem der Ausbreitungspfad verläuft, zu begrenzen. Hierbei sind an der Seitenwand 3 separat ausgebildete Dämpfelemente 14 angebracht, beispielsweise aufgeklebt. Die Dämpfelemente 14 können beispielsweise aus einem elastischen Material mit hoher innerer Reibung, beispielsweise aus einem Gummi oder einem Elastomer, bestehen.

Die Nutzung von zwei Schwingungswandlern 6, 8 an der Seitenwand 3 hat den Vorteil, dass die Schwingungswandler 6, 8 zusätzlich dazu genutzt werden können, Durchflussgeschwindigkeiten, Durchflussvolumen oder andere Fluidgrößen des im Messvolumen 2 befindlichen beziehungsweise dieses durchströmenden Fluids zu erfassen. Dies kann beispielsweise dadurch erreicht werden, dass die Steuereinrichtung 7 den Schwingungswandler 6 mit einer anderen Anregungsfrequenz ansteuert, durch die eine Lamb-Welle in der Seitenwand 3 angeregt wird. Die Anregungsfrequenz kann in diesem Fall so gewählt werden, dass im Fluid eine Druckwelle angeregt werden kann und diese Druckwelle kann über das Fluid zu der Seitenwand im Bereich des weiteren Schwingungswandlers 8 geführt und dort erfasst werden. In Abhängigkeit der Laufzeit der geführten Welle von dem Schwingungswandler 6 zu dem weiteren Schwingungswandler 8 beziehungsweise in Abhängigkeit eines Laufzeitunterschieds zwischen dieser Übertragung und der umgekehrten Übertragungsrichtung kann eine Durchflussgeschwindigkeit bestimmt werden. Dieses Vorgehen ist im Bereich der Ultraschalldurchflusszähler bekannt und soll nicht detailliert erläutert werden. Durchflussmesser können somit mit geringem technischem Aufwand modifiziert werden, um zusätzlich eine Druckmessung zu ermöglichen.

In alternativen Ausführungen, die im Folgendem mit Bezug auf die Figuren 6 bis 9 diskutiert werden, ist es auch möglich, nur einen einzigen Schwingungswandler zu nutzen. Der Ausbreitungspfad wird in diesem Fall so gewählt beziehungsweise begrenzt, dass die geführte Welle zurück zu dem Schwingungswandler 6 geführt wird. Für Elemente mit gleicher Funktion werden hierbei die gleichen Bezugszeichen genutzt wie in den vorangegangenen Beispielen.

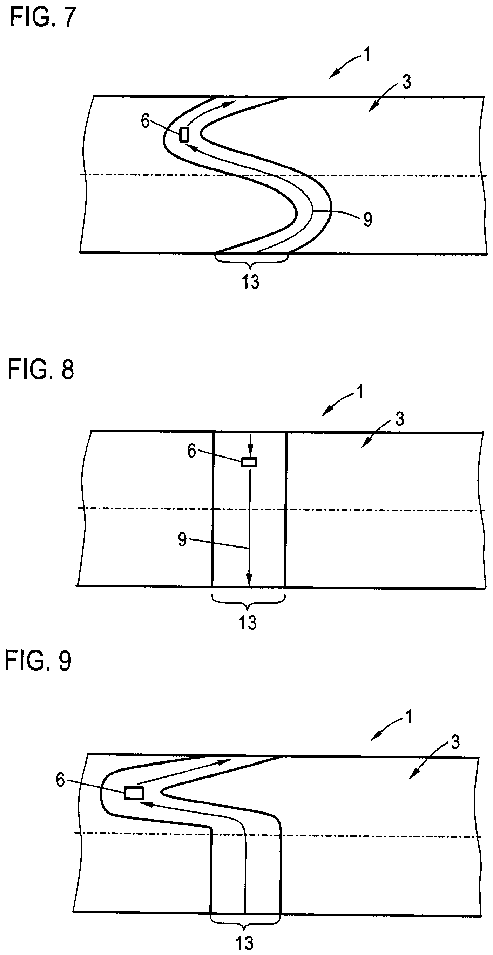

Die Fig. 6 und 7 zeigen ein Ausführungsbeispiel, bei dem der durch die Pfeile 9 gezeigte Ausbreitungspfad entlang eines elliptischen Rings um das durch die Seitenwand 3 gebildete Messrohr geführt wird. Hierbei zeigt Fig. 6 eine Draufsicht auf das Messrohr und Fig. 7 die entrollte Außenfläche der Seitenwand 3. Der Bereich 13, innerhalb dem die geführte Welle geführt wird, wird wie zuvor dadurch gebildet, dass die geführte Welle am Rand dieses Bereichs reflektiert beziehungsweise gedämpft wird. Dies wird in dem in Fig. 6 und 7 gezeigten Ausführungsbeispiel jedoch dadurch erreicht, dass die Seitenwand in dem Bereich 13 des Ausbreitungspfades eine andere Wandstärke aufweist, nämlich dünner ist, als in den weiteren Bereichen der Seitenwand, also insbesondere als in einem zu dem Bereich 13 des Ausbreitungspfads benachbarten Abschnitt der Seitenwand. Durch eine sprunghafte Änderung der Wanddicke ändert sich die Impedanz für die Führung der geführten Welle sprunghaft, wodurch die geführte Welle zum großen Teil reflektiert wird.

In einer alternativen Ausgestaltung der Messeinrichtung 1 könnte der Bereich 13 auch, wie vorangehend erläutert, durch seitliche Reflexions- und/oder Dämpfelemente 10, 14 begrenzt werden. Auch ist es möglich, die Begrenzung des Bereichs 13 durch eine Variation der Wandstärke in Fällen zu nutzen, in denen mehrere Schwingungswandler 6, 8 genutzt werden. Statt einer Reduktion der Wandstärke im Bereich 13 könnte diese im Bereich 13 auch erhöht sein.

Aufgrund der Begrenzung des Bereichs 13 kann sich die geführte Welle, die durch den Schwingungswandler 6 abgestrahlt wird, im Wesentlichen nur entlang des durch den Pfeil 9 gezeigten Ausbreitungspfades ausbreiten. Vorzugsweise kann die geführte Welle hierbei nur in eine Richtung abgestrahlt werden, beispielsweise indem Interferenzeffekte, die bei einer Anregung der geführten Welle in mehreren beabstandeten Bereichen entstehen, genutzt werden. Es ist jedoch auch möglich, dass sowohl eine geführte Welle in Richtung der Pfeile 9 als auch entgegen dieser Richtung ausgestrahlt wird.

Die geführte Welle kehrt, nachdem sie das Messrohr umlaufen hat, zu dem Schwingungswandler 6 zurück. Die resultierende Schwingung des Schwingungswandlers kann durch die Steuereinrichtung 7 als Messdaten oder als Teil der Messdaten erfasst werden. Insbesondere kann eine Laufzeit für den Umlauf der geführten Welle um das Messrohr erfasst werden.

Wie bereits erläutert, kann die Messgenauigkeit der Druckmessung potentiell erhöht werden, wenn ein längerer Ausbreitungspfad genutzt wird. Eine Verlängerung des Ausbreitungspfades kann in dem in Fig. 6 und 7 gezeigten Beispiel dadurch erreicht werden, dass die geführte Welle mehrfach das Messrohr umläuft, bevor die Messdaten oder zumindest Teile der Messdaten erfasst werden. Anders ausgedrückt, wird die geführte Welle wenigstens einmal zu dem Schwingungswandler 6 und an diesem vorbei geführt, um anschließend ein weiteres Mal zu dem Schwingungswandler geführt zu werden, wobei die Steuereinrichtung 7 derart eingerichtet ist, dass die Messdaten oder zumindest Teile der Messdaten erfasst werden, wenn die geführte Welle zu dem weiteren Mal zu dem Schwingungswandler 6 zurückgeführt wird. Dies kann beispielsweise dadurch erreicht werden, dass mit der Erfassung der Messdaten erst nach einer bestimmten Wartezeit nach der Anregung des Schwingungswandlers 6 zur Aussendung der geführten Welle begonnen wird. Diese kann durch Vorversuche beziehungsweise eine Kalibrierung so gewählt werden, dass die Messdaten erst dann erfasst werden, wenn die geführte Welle zu dem weiteren Mal zu dem Schwingungswandler 6 geführt wird. Es ist jedoch auch möglich, dass durch die Steuereinrichtung 7 über den Schwingungswandler 6 jeweils erkannt wird, wenn die geführte Welle den Schwingungswandler 6 erreicht. Somit können die einzelnen Umläufe um das Messrohr durch die Steuereinrichtung 7 gezählt werden und es kann beispielsweise eine Umlaufzeit für zwei, drei oder vier Umläufe ermittelt werden und in Abhängigkeit dieser kann der Druck ermittelt werden.

Die in Fig. 6 und 7 gezeigte Struktur kann weiter vereinfacht werden. Beispielsweise kann, wie in Fig. 8 gezeigt ist, ein senkrecht zur Durchflussrichtung des Messrohrs stehender Ring als Bereich 13 genutzt werden, innerhalb dem die geführte Welle, wie durch den Pfeil 9 gezeigt ist, geführt wird. Der Bereich 13 kann wie vorangehend erläutert begrenzt werden. Der in Fig. 8 gezeigte Aufbau ermöglicht eine Integration einer Druckmessung bereits bei sehr kurzen zur Verfügung stehenden Rohrlängen beziehungsweise ermöglicht einen besonders kompakt bauenden Druckmesser. Gegenüber dem in Fig. 7 gezeigten Ausführungsbeispiel ist die Weglänge der geführten Welle, bis diese auf dem Ausbreitungspfad zu dem Schwingungswandler 6 zurückkehrt, kleiner. Dies kann dadurch kompensiert werden, dass wie vorangehend erläutert, eine Erfassung der Messdaten erst nach mehreren Umläufen der geführten Welle erfolgt.

Durch eine entsprechende Begrenzung des Bereichs 13, beispielsweise durch eine Variation der Wandstärke, Reflexionselemente 10 und/oder Dämpfelemente 14, kann ein nahezu beliebig geformter Ausbreitungspfad für die geführte Welle vorgegeben werden. Ein Beispiel hierfür ist in Fig. 9 gezeigt, wobei der Bereich 13 und somit der Ausbreitungspfad in diesem Fall konusförmig um das Messrohr 3 geführt ist. Selbstverständlich wären auch eine Vielzahl anderer Formen möglich.

## Patentansprüche

1. Messeinrichtung zur Ermittlung eines Drucks in einem ein Fluid aufnehmenden oder von dem Fluid durchströmten Messvolumen (2), wobei die Messvorrichtung eine Seitenwand (3) umfasst, die das Messvolumen (2) zumindest abschnittsweise begrenzt, **dadurch gekennzeichnet, dass** an der Seitenwand (3) ein Schwingungswandler (6) angeordnet ist, wobei durch eine Steuereinrichtung (7) der Messeinrichtung (1) der Schwingungswandler (6) ansteuerbar ist, um eine durch die Seitenwand (3) geführte Welle anzuregen, wobei die geführte Welle durch die Seitenwand (3) entlang eines Ausbreitungspfades, zurück zu dem Schwingungswandler (6) oder zu wenigstens einem weiteren Schwingungswandler (8) führbar und dort durch die Steuereinrichtung (7) zur Ermittlung von Messdaten erfassbar ist, wobei der Druck durch die Steuereinrichtung (7) in Abhängigkeit der Messdaten durch eine Laufzeiterfassung ermittelbar ist, bei der eine Zeitdauer ermittelt wird, bis die geführte Welle entlang des Ausbreitungspfades zu dem Schwingungswandler (6) zurückkehrt oder bis sie den weiteren Schwingungswandler (8) erreicht, wobei die Seitenwand (3) ein das Messvolumen umgreifendes Messrohr ausbildet, wobei der Ausbreitungspfad wenigstens einmal in Umfangsrichtung um das Messrohr umläuft.

2. Messeinrichtung nach Anspruch 1, **dadurch gekennzeichnet, dass** die Seitenwand (3) wenigstens ein Dämpfelement (14) aufweist, durch das die geführte Welle bedämpfbar ist und/oder dass die Seitenwand wenigstens ein Reflexionselement (10) aufweist, durch das die geführte Welle zumindest teilweise reflektierbar ist.

3. Messeinrichtung nach Anspruch 2, **dadurch gekennzeichnet, dass** das Dämpfelement (14) und/oder das Reflexionselement (10) dadurch ausgebildet sind, dass die Seitenwand (3) wenigstens eine Ausnehmung und/oder wenigstens einen Vorsprung aufweist.

4. Messeinrichtung nach Anspruch 2 oder 3, **dadurch gekennzeichnet, dass** der Ausbreitungspfad zumindest in einem Abschnitt des Ausbreitungspfads seitlich durch das Dämpfelement (14) und/oder das Reflexionselement (10) begrenzt ist.

5. Messeinrichtung nach einem der vorangehenden Ansprüche, **dadurch gekennzeichnet, dass** die Seitenwand (3) in dem Bereich (13) des Ausbreitungspfads eine andere Wandstärke aufweist als in einem zu dem Bereich (13) des Ausbreitungspfads benachbarten Abschnitt der Seitenwand (3).

6. Messeinrichtung nach einem der vorangehenden Ansprüche, **dadurch gekennzeichnet, dass** die geführte Welle entlang des Ausbreitungspfades wenigstens einmal zurück zu dem Schwingungswandler (6) und an ihm vorbei führbar ist, um ein weiteres Mal zu dem Schwingungswandler (6) geführt zu werden, wobei die Steuereinrichtung (7) derart eingerichtet ist, dass die Messdaten oder zumindest Teile der Messdaten erfasst werden, wenn die geführte Welle zu dem weiteren Mal zu dem Schwingungswandler (6) zurück geführt wird.

7. Messeinrichtung nach einem der vorangehenden Ansprüche, **dadurch gekennzeichnet, dass** die Steuereinrichtung (7), die Seitenwand (3) und der Schwingungswandler (6) derart eingerichtet sind, dass eine Rayleigh-Welle, eine Quasi-Scholte-Welle oder eine Lamb-Welle als geführte Welle angeregt wird.

8. Messeinrichtung nach einem der vorangehenden Ansprüche, **dadurch gekennzeichnet, dass** die Seitenwand (3) zumindest im Bereich (13) des Ausbreitungspfades eine konstante Dicke aufweist und/oder dass eine Innenfläche und/oder eine Außenfläche der Seitenwand (3) in diesem Bereich eine stetige Krümmung ohne Vorzeichenwechsel aufweisen.

9. Verfahren zur Ermittlung eines Drucks in einem ein Fluid aufnehmenden oder von dem Fluid durchströmten Messvolumen (2), wobei das Messvolumen (2) zumindest abschnittsweise durch eine Seitenwand (3) begrenzt wird, wobei die Seitenwand (3) ein das Messvolumen umgreifendes Messrohr ausbildet, wobei an der Seitenwand (3) ein Schwingungswandler (6) angeordnet ist, wobei der Schwingungswandler (6) durch eine Steuereinrichtung (7) angesteuert wird, um eine durch die Seitenwand (3) geführte Welle anzuregen, wobei die geführte Welle durch die Seitenwand entlang eines Ausbreitungspfades, der wenigstens einmal in Umfangsrichtung um das Messrohr umläuft, zurück zu dem Schwingungswandler (6) oder zu wenigstens einem weiteren Schwingungswandler (8) geführt und dort durch die Steuereinrichtung (7) zur Ermittlung von Messdaten erfasst wird, wobei der Druck durch die Steuereinrichtung (7) in Abhängigkeit der Messdaten durch eine Laufzeiterfassung ermittelt wird, bei der eine Zeitdauer ermittelt wird, bis die geführte Welle entlang des Ausbreitungspfades zu dem Schwingungswandler (6) zurückkehrt oder bis sie den weiteren Schwingungswandler (8) erreicht.

## Claims

1. Measurement device for ascertaining a pressure in a measurement volume (2) which receives a fluid or through which fluid flows, wherein the measurement apparatus comprises a side wall (3) that bounds the measurement volume (2) at least sectionally, **characterized in that** a vibration transducer (6) is arranged on the side wall (3), wherein the vibration transducer (6) is controllable by a control device (7) of the measurement device (1) to excite a wave that is guided through the side wall (3), wherein the guided wave is able to be guided through the side wall (3) along a propagation path back to the vibration transducer (6) or to at least one further vibration transducer (8) and is able to be captured there by the control device (7) in order to ascertain measurement data, wherein the pressure is able to be ascertained by the control device (7) in dependence on the measurement data using time-of-flight capturing, in which a time duration until the guided wave returns along the propagation path to the vibration transducer (6) or until it reaches the further vibration transducer (8) is ascertained, wherein the side wall (3) forms a measurement pipe enclosing the measurement volume, wherein the propagation path extends at least once in the circumferential direction around the measurement pipe.

2. Measurement device according to Claim 1, **characterized in that** the side wall (3) has at least one attenuation element (14) by way of which the guided wave is able to be attenuated and/or **in that** the side wall has at least one reflection element (10) by way of which the guided wave is able to be at least partially reflected.

3. Measurement device according to Claim 2, **characterized in that** the attenuation element (14) and/or the reflection element (10) are formed by the side wall (3) having at least one cutout and/or at least one protrusion.

4. Measurement device according to Claim 2 or 3, **characterized in that** the propagation path is bounded at least in one section of the propagation path laterally by the attenuation element (14) and/or the reflection element (10).

5. Measurement device according to one of the preceding claims, **characterized in that** the side wall (3) has a different wall thickness in the region (13) of the propagation path than in a section of the side wall (3) that is adjacent to the region (13) of the propagation path.

6. Measurement device according to one of the preceding claims, **characterized in that** the guided wave is able to be guided along the propagation path at least once back to the vibration transducer (6) and past it in order to be guided a further time to the vibration transducer (6), wherein the control device (7) is set up such that the measurement data or at least parts of the measurement data are captured when the guided wave is guided back said further time to the vibration transducer (6).

7. Measurement device according to one of the preceding claims, **characterized in that** the control device (7), the side wall (3) and the vibration transducer (6) are set up such that a Rayleigh wave, a quasi-Scholte wave or a Lamb wave is excited as the guided wave.

8. Measurement device according to one of the preceding claims, **characterized in that** the side wall (3) has a constant thickness at least in the region (13) of the propagation path and/or **in that** an inner surface and/or an outer surface of the side wall (3) have in this region a constant curvature without a change in sign.

9. Method for ascertaining a pressure in a measurement volume (2) which receives a fluid or through which fluid flows, wherein the measurement volume (2) is bounded at least sectionally by a side wall (3), wherein the side wall (3) forms a measurement pipe enclosing the measurement volume, wherein a vibration transducer (6) is arranged on the side wall (3), wherein the vibration transducer (6) is controlled by a control device (7) to excite a wave that is guided through the side wall (3), wherein the guided wave is guided through the side wall along a propagation path, which extends at least once in the circumferential direction around the measurement pipe, back to the vibration transducer (6) or to at least one further vibration transducer (8) and is captured there by the control device (7) in order to ascertain measurement data, wherein the pressure is ascertained by the control device (7) in dependence on the measurement data using time-of-flight capturing, in which a time duration until the guided wave returns along the propagation path to the vibration transducer (6) or until it reaches the further vibration transducer (8) is ascertained.

## Revendications

1. Dispositif de mesure permettant de déterminer une pression dans un volume de mesure (2) recevant un fluide ou traversé par le fluide, l'appareil de mesure comportant une paroi latérale (3) qui limite, au moins dans certaines parties, le volume de mesure (2), **caractérisé en ce qu'**un transducteur de vibrations (6) est disposé au niveau de la paroi latérale (3), le transducteur de vibrations (6) pouvant être commandé au moyen d'un dispositif de commande (7) du dispositif de mesure (1), afin d'exciter une onde guidée par la paroi latérale (3), l'onde guidée pouvant être guidée par la paroi latérale (3) le long d'un trajet de propagation, de manière à revenir au transducteur de vibrations (6) ou jusqu'à au moins un autre transducteur de vibrations (8) et pouvant y être acquise par le dispositif de commande (7) pour la détermination de données de mesure, la pression pouvant être déterminée au moyen du dispositif de commande (7) en fonction des données de mesure par une acquisition du temps de propagation lors de laquelle une durée est déterminée, durée jusqu'à ce que l'onde guidée le long du trajet de propagation revienne au transducteur de vibrations (6) ou jusqu'à ce qu'elle atteigne l'autre transducteur de vibrations (8), la paroi latérale (3) formant un tube de mesure entourant le volume de mesure, le trajet de propagation s'étendant au moins une fois dans la direction périphérique autour du tube de mesure.

2. Dispositif de mesure selon la revendication 1, **caractérisé en ce que** la paroi latérale (3) comprend au moins un élément d'amortissement (14) au moyen duquel l'onde guidée peut être amortie et/ou **en ce que** la paroi latérale comprend au moins un élément de réflexion (10) au moyen duquel l'onde guidée peut être réfléchie au moins partiellement.

3. Dispositif de mesure selon la revendication 2, **caractérisé en ce que** l'élément d'amortissement (14) et/ou l'élément de réflexion (10) sont réalisés par le fait que la paroi latérale (3) comprend au moins un évidement et/ou au moins une saillie.

4. Dispositif de mesure selon la revendication 2 ou 3, **caractérisé en ce que** le trajet de propagation est limité latéralement par l'élément d'amortissement (14) et/ou l'élément de réflexion (10) au moins dans une partie du trajet de propagation.

5. Dispositif de mesure selon l'une des revendications précédentes, **caractérisé en ce que** la paroi latérale (3) présente, dans la région (13) du trajet de propagation, une épaisseur de paroi autre que dans une partie de la paroi latérale (3) adjacente à la région (13) du trajet de propagation.

6. Dispositif de mesure selon l'une des revendications précédentes, **caractérisé en ce que** l'onde guidée peut être guidée le long du trajet de propagation au moins une fois de manière à revenir au transducteur de vibrations (6) et à passer devant celui-ci, pour être guidée une autre fois jusqu'au transducteur de vibrations (6), le dispositif de commande (7) étant conçu de telle sorte que les données de mesure ou au moins des parties des données de mesure sont acquises lorsque l'onde guidée est guidée de manière à revenir au transducteur de vibrations (6) une autre fois.

7. Dispositif de mesure selon l'une des revendications précédentes, **caractérisé en ce que** le dispositif de commande (7), la paroi latérale (3) et le transducteur de vibrations (6) sont conçus de telle sorte qu'une onde de Rayleigh, une onde quasi-Scholte ou une onde de Lamb est excitée en tant qu'onde guidée.

8. Dispositif de mesure selon l'une des revendications précédentes, **caractérisé en ce que** la paroi latérale (3) présente, au moins dans la région (13) du trajet de propagation, une épaisseur constante et/ou **en ce qu'**une surface intérieure et/ou une surface extérieure de la paroi latérale (3) dans cette région présente une courbure constante sans changement de signe.

9. Procédé permettant de déterminer une pression dans un volume de mesure (2) recevant un fluide ou traversé par le fluide, dans lequel le volume de mesure (2) est limité, au moins dans certaines parties, par une paroi latérale (3), dans lequel la paroi latérale (3) forme un tube de mesure entourant le volume de mesure, dans lequel un transducteur de vibrations (6) est disposé au niveau de la paroi latérale (3), dans lequel le transducteur de vibrations (6) est commandé au moyen d'un dispositif de commande (7), afin d'exciter une onde guidée par la paroi latérale (3), dans lequel l'onde guidée est guidée par la paroi latérale le long d'un trajet de propagation, qui s'étend au moins une fois dans la direction périphérique autour du tube de mesure, de manière à revenir au transducteur de vibrations (6) ou jusqu'à au moins un autre transducteur de vibrations (8) et y est acquise par le dispositif de commande (7) pour la détermination de données de mesure, dans lequel la pression est déterminée au moyen du dispositif de commande (7) en fonction des données de mesure par une acquisition du temps de propagation lors de laquelle une durée est déterminée, durée jusqu'à ce que l'onde guidée le long du trajet de propagation revienne au transducteur de vibrations (6) ou jusqu'à ce qu'elle atteigne l'autre transducteur de vibrations (8).
